Europäisches Patentamt

European Patent Office

Office européen des brevets

(11) Publication number: **0 031 802**
A2

# EUROPEAN PATENT APPLICATION

(21) Application number: 80850192.8

(51) Int. Cl.³: **A 21 D 13/08**

(22) Date of filing: **18.12.80**

(30) Priority: **19.12.79 SE 7910482**

(43) Date of publication of application: **08.07.81**
**Bulletin 81/27**

(84) Designated Contracting States: **DE FR GB NL SE**

(71) Applicant: **SVENSKA KNÄCKE AB, Fack,**
**S-682 01 Filipstad (SE)**

(72) Inventor: **Söhrman, Ulf, 18 V. Villagatan,**
**S-682 00 Filipstad (SE)**

(74) Representative: **Neihoff, Arne et al, AB STOCKHOLMS**
**PATENTBYRA Box 3129, S-103 62 Stockholm (SE)**

(54) **A process of preparing Wiener crispbread.**

(57) Wiener crispbread is prepared by pressing and rolling out a dough prepared in a way known per se after kneading and a floor period of 0—25 min, margarine being applied between two dough layers, the dough sheet obtained being folded 5—10 times in a first folding station and 2—6 times in a second folding station, after which the dough is rolled to a final thickness in two steps with floor period of 0—12 min. between the rolling steps.

EP 0 031 802 A2

## A process of preparing Wiener crispbread

This invention relates to a process of preparing a laminated crispbread, here called Wiener crispbread.

Attempts have been made for a long time to prepare a very fine crispbread based on wheat-flour. This has now been made possible in such a way that a dough prepared in a way known per se is pressed and rolled out after kneading and a resting time of 0-25 min, that margarine is disposed between two dough layers, that the dough line is folded 5-10 times in a first folding station and 2-6 times in a second folding station and that the dough is thereafter rolled down to final thickness in two steps with a resting time of 0-12 min. between the rolling steps.

Such a dough can be used as has been prepared according to a standard formula for crispbread, but contains karlsbader salt and also less amount of water and furthermore also less fat (shortening) and e.g. has the following composition:

| | | |
|---|---|---|
| Wheat flour | 15,0 kg | 100% |
| Water | 6,0-8,0 " | 47% |
| Yeast (compressed yeast) | 0,4-0,9 " | 6% |
| Margarine | 0,5-1,2 " | 8% |
| Skim milk powder (nonfat dry milk) | 0,3 " | 2% |
| Whole milk powder (dried whole milk) | 0,3-0,9 " | 2-6% |
| Lecithin | 0,15 " | 1% |
| Salt | 0,15 " | 1% |
| Karlsbader salt | 0,15-0,30 " | 1-2% |

As margarine any margarine in principle can be used; however, it has been found suitable to use one of the following composition:

| | | |
|---|---|---|
| Citric acid | (E 330) | 0,5 g/kg |
| Annatto extract | (E 160 b) | 2,0 mg/kg |
| Lecithin | (E 322) | 4,7 g/kg |
| Monoglycerides | (E 471) | 4,7 g/kg |
| Polyglycerol ester | (E 476) | 1,6 g/kg |

It is suitable that the margarine is beaten up before it is adapted between dough layers; in this way a greater porosity is obtained in the Wiener crispbread. The margarine is preferably beaten up with air to a density fo 600-720 g/l. It is suitable to admixe in the mixture of margarine and air Karlsbader salt in an amount of 60-250 g per 15 kg flour. The margarine should preferably after the admixture of air and Karlsbader salt rest cold for a floor time of about 2 hours so that it has solidified before being placed between dough layers.

It is suitable that the room, in which the process is carried out, is carefully tempered. The temperature can e.g. be kept at 22-25°C. The extrusion of dough can e.g. be carried out at a positive pressure of 10-250 kPa, preferably 20-60 kPa. The resting time between pressing and rolling is preferably at least 3 min. and maximum 15 min, say 9 min.

The folding operations after rolling were preferably carried out in such a way that the dough sheet (web) was folded in the first folding station to 5-10 layers, preferably 6-8 layers, the dough sheet at the folding operations in the machine being powdered before the folding moment with a finely distributed sweet-milk powder and the amount of fat then being adapted, and preferably treated in one or two rolling stations before folding in the second folding station where the dough sheet (strand) is further folded to 2-6 layers, preferably 4 layers, before the dough is rolled down in two steps. It is suitable with a resting time of 3-6 min. between the rolling steps.

The margarine is preferably used in such an amount that 8-20% of fat based on the amount of flour are present in the product before baking. In the final product the amount of fat is 6-24%, preferably 11-14% based on the included amount of flour. After baking the final product should have a thickness of 5,5-15 mm. The thickness of the dough strand before baking is then 1-3 mm, preferably 1,42-1,86 mm. Each dough layer has preferably a thickness of 35-66 μm, preferably 40-47 μm, while each fat layer before baking has conveniently a thickness of 8-25 μm.

Example. Dough was prepared according to the given standard formula for crispbread and was extruded from an extruder with screw (Rheon) for production of sheet dough. A layer of margarine was pressed out within the dough shaped to a tube, the used amount of fat being 14% based on the amount of flour. Air to a density of 650 g/l had been admixed in advance in the margarine. The mixture of margarine and air was mixed with 100 g Karlsbader salt based on 15 kg flour. After kneading the dough had been left to rest for 8 min. before it was fed continuously through the extruder together with the margarine.

Flour was powdered on all sides of the tubular dough strand which was then moved automatically to a kneading machine (type Theon). After the rolling machine the dough strand was folded and placed on a transversal conveyor. The rolled dough strand was folded in a first folding station in seven layers and conveyed fully automatically to a new rolling machine (type Rheon). After this second rolling station the dough strand was folded once more in four layers. After this second folding station the dough strand was moved fully automatically to two rolling stations (so-called stretchers of type Rheon). The dough sheet was moved between these rolling stations on an intermediate conveyor, so that the dough obtained a resting time (floor) between the two stations for 8 min. After this the dough was rolled out to a final thickness of the dough strand of 1,7 mm. The dough line now finished was thereafter baked out in known manner and obtained a thickness of 11 mm after baking.

## PATENT CLAIMS

1. A process of preparing Wiener crispbread, characterized in that a dough prepared in a way known per se is pressed and rolled out after kneading and a floor period of 0-25 min, that margarine is applied between two dough layers, that the dough sheet obtained is folded 5-10 times in a first folding station and 2-6 times in a second folding station and that the dough is then rolled down to a final thickness in two steps with a floor period of 0-12 min. between the rolling steps.

2. The process of claim 1, characterized in that the dough is pressed out like a tube with the margarine as filling material in the tube, after which it is rolled out before the first folding operation.

3. The process of claim 1 or 2, characterized in that the room in which the process is carried out, is carefully tmpered.

4. The process of claim 3, characterized in that the temperature is kept at 22-25°C.

5. The process of any one of claims 1-4, characterized in that the extrusion is carried out at a positive pressure of 10-250 kPa, preferably 20-60 kPa.

6. The process of any one of claims 1-5, characterized in that the floor period before the pressing is 3-9 min.

7. The process of any one of claims 1-6, characterized in that the folding operation in the two folding stations amounts to totally 20-40 times, preferably 6-8 layers being folded in the first folding station and preferably 2-4 layers in the second folding station.

8. The process of any one of claims 1-7, characterized in that the floor period between the rolling steps is 3-6 min.

9. The process of any one of claims 1-8, characterized in that the final thickness of the dough strand is 1-3 mm, preferably 1,42-1,86 mm.

10. The process of any one of claims 1-9, characterized in that each dough layer is given a thickness of 35-55µm, preferably 40-47 µm.

11. The process of any one of claims 1-10, characterized in that each fat layer is given a thickness of 8-25 μm, preferably 8-20 μm.